# DEMANDE DE BREVET EUROPEEN

(11) **EP 1 547 856 A1**
(43) Date de publication de la demande: **29.06.2005**
(21) Numéro de dépôt: 04300942.2
(22) Date de dépôt: 23.12.2004
(51) Int. Cl.: B60N 2/30

(54) **Siège pour véhicule**

(30) Priorité: 23.12.2003 FR 0315261
(71) Demandeur: Renault s.a.s., 92100 Boulogne Billancourt (FR)
(72) Inventeur: Riou, Jean Christophe, 78640, Villiers Saint Frederic (FR)

(57) **Abrégé**

Siège pour véhicule automobile, comportant une assise (12), un dossier (14), une structure de montage (20, 22) de l'assise articulée par rapport au plancher (16) du véhicule selon des axes transversaux de manière à permettre le déplacement de l'assise d'une position arrière haute d'utilisation à une position avant basse de rangement, des moyens de basculement (40, 44) du dossier (14) entre une position verticale d'utilisation et une position horizontale de rangement dans laquelle il est au moins pour partie superposé au dessus de l'assise, et des moyens d'entraînement (50) articulés sur la structure de montage de l'assise pour synchroniser le déplacement de l'assise et le basculement du dossier. Les moyens de basculement (40, 44) du dossier (14) comportent un premier bras (40) de basculement articulé sur le dossier (14) et sur le plancher (16) de manière que le basculement du dossier (14) s'effectue autour d'un axe transversal de basculement mobile par rapport au plancher (16). Véhicule comportant un tel siège.

## Description

La présente invention se rapporte à un siège pour véhicule automobile. Elle concerne en particulier un siège comportant une assise et un dossier mobiles d'une position déployée d'utilisation à une position repliée de rangement.

Le document EP0030924 décrit un siège pour véhicule automobile, comportant une assise, un dossier, une structure de montage de l'assise articulée par rapport au plancher du véhicule selon des axes transversaux de manière à permettre le déplacement de l'assise d'une position arrière haute d'utilisation à une position avant basse de rangement, des moyens de basculement du dossier entre une position verticale d'utilisation et une position horizontale de rangement dans laquelle le dossier est au moins en partie superposé à l'assise, au dessus de cette dernière. Des moyens d'entraînement articulés sur la structure de montage de l'assise permettent de synchroniser le déplacement de l'assise et le basculement du dossier.

Dans ce document, le dossier du siège est monté à pivotement par rapport au plancher à une extrémité inférieure, sur un support fixe par rapport au plancher, en dessous du niveau de la paroi de fond d'un compartiment à bagage du véhicule. La disposition des moyens de basculement du dossier ne permet pas de liberté d'emplacement de l'axe de basculement du dossier par rapport au plancher. Cette disposition peut être préjudiciable à la liberté d'architecture du véhicule, par exemple quand l'architecture voulue nécessite de positionner l'assise et/ou le dossier en hauteur par rapport au plancher. Il est préférable que les moyens de basculement du dossier permettent de préserver la liberté d'architecture du véhicule nécessaire à une prestation équilibrée entre confort des passagers et capacité de chargement du véhicule.

L'invention a pour objet un siège pour véhicule automobile, comportant une assise, un dossier, une structure de montage de l'assise articulée par rapport au plancher du véhicule selon des axes transversaux de manière à permettre le déplacement de l'assise d'une position arrière haute d'utilisation à une position avant basse de rangement, des moyens de basculement du dossier entre une position verticale d'utilisation et une position horizontale de rangement dans laquelle il est au moins pour partie superposé au dessus de l'assise, et des moyens d'entraînement articulés sur la structure de montage de l'assise pour synchroniser le déplacement de l'assise et le basculement du dossier. Les moyens de basculement du dossier comportent un premier bras de basculement articulé sur le dossier et sur le plancher de manière que le basculement du dossier s'effectue autour d'un axe transversal de basculement mobile par rapport au plancher.

Les moyens d'entraînement peuvent être articulés sur le premier bras de basculement.

Les moyens de basculement du dossier peuvent comporter un second bras de basculement articulé sur le dossier et sur le plancher.

Le premier bras peut être articulé sur le plancher à l'arrière du second bras de basculement.

La structure de montage de l'assise comportant un pied articulé sur le plancher et sur l'assise, les moyens d'entraînement peuvent être articulés sur ledit pied de la structure de montage.

La structure de montage de l'assise comportant un pied avant et un pied arrière chacun articulé sur le plancher et sur l'assise, les moyens d'entraînement peuvent être articulés sur le pied arrière de la structure de montage.

Les moyens d'entraînement peuvent comporter une biellette dont une extrémité est articulée sur la structure de montage et dont l'autre extrémité est articulée sur le premier bras de basculement.

Les moyens de basculement du dossier comportant un second bras de basculement articulé sur le dossier et sur le plancher, l'axe d'articulation du premier bras sur le dossier peut être situé au dessus de l'axe d'articulation du second bras sur le dossier.

Les moyens d'entraînement étant articulés sur le premier bras de basculement, un axe d'articulation des moyens d'entraînement sur le premier bras peut être situé sur la moitié supérieure du premier bras.

La structure de montage de l'assise comportant un pied articulé sur le plancher et sur l'assise, les moyens d'entraînement étant articulés sur ledit pied de la structure de montage, un axe d'articulation des moyens d'entraînement sur le pied de la structure de montage peut être situé sur la moitié supérieure dudit pied.

L'invention concerne aussi un véhicule comportant un siège tel que défini précédemment, dans lequel en position horizontale de rangement du dossier, un dos du dossier est situé sensiblement dans le prolongement d'une paroi de fond d'un compartiment de chargement du véhicule.

La paroi de fond peut comporter une rampe avant de rattrapage de la différence de niveau entre le dos du dossier et une portion arrière de la paroi de fond.

Le véhicule peut comporter un élément de raccordement du dos du dossier avec la paroi de fond.

Le dos du dossier et la face supérieure de la paroi de fond peuvent être sensiblement plans et sensiblement coplanaires en position de rangement du dossier.

D'autres caractéristiques et avantages de l'invention apparaîtront clairement à la lecture de la description suivante d'un mode de réalisation non limitatif de celle-ci, en liaison avec les dessins annexés sur lesquels :
- la figure 1 est une vue schématique de côté du siège selon l'invention en position déployée d'utilisation,
- la figure 2 est une vue schématique de côté du siège selon l'invention en position repliée de rangement,
- la figure 3 est une vue schématique de côté du siège selon l'invention dans une position intermédiaire aux positions précédentes.

Un siège 10 avant ou arrière de véhicule automobile comporte classiquement une assise 12, un dossier 14, et des moyens permettant le montage de l'assise et du dossier sur un plancher 16 de l'habitacle du véhicule.

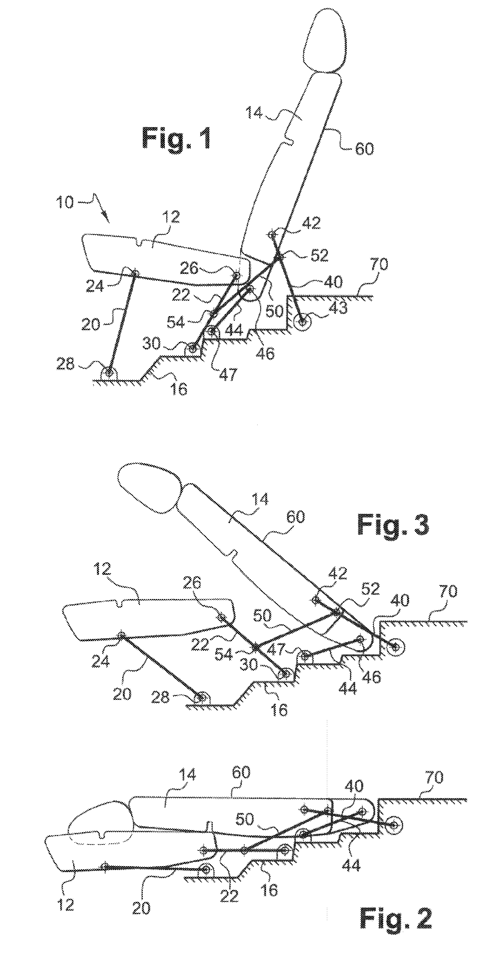

Dans l'exemple de réalisation de l'invention représenté, l'assise est montée articulée par rapport au plancher selon des axes transversaux de manière à permettre son déplacement d'une position arrière haute d'utilisation (figure 1) à une position avant basse de rangement (figure 2), par exemple pour augmenter la surface de chargement du véhicule. Une structure de montage de l'assise sur le plancher du véhicule permet ce déplacement.

La structure comporte un pied avant 20 et un pied arrière 22, chacun d'articulé sur le plancher 16 et sur l'assise 12. Le pied avant 20 est lié à l'assise 12 par un pivot dont l'axe 18 est situé aux trois quarts avant et à mi épaisseur de cette dernière. Le pied arrière 22 est lié à l'assise 12 par un pivot dont l'axe 26 est situé sensiblement à l'extrémité arrière de l'assise. Les pieds 20, 22 sont liés au plancher 16 par un pivot dont les axes sont respectivement référencés 28 et 30.

En position d'utilisation, les pieds 20, 22 sont inclinés de l'avant vers l'arrière, du bas vers le haut, au bénéfice de la tenue de la structure en cas de choc.

Dans l'exemple de réalisation de l'invention représenté, des moyens de basculement du dossier 14 sont prévus pour permettre le basculement du dossier entre une position verticale d'utilisation (figure 1) et une position horizontale de rangement (figure 2). Dans la position horizontale de rangement le dossier 14 est au moins en partie superposé à l'assise 12, au dessus de cette dernière, par exemple pour augmenter la surface de chargement du véhicule.

Les moyens de basculement du dossier comportent un premier bras arrière 40 formant un support de basculement articulé sur le dossier 14 et sur le plancher 16. Le premier bras 40 est lié au dossier 14 par un pivot dont l'axe 42 est situé au trois quart inférieur de la hauteur du dossier, à mi épaisseur. Il est lié au plancher 16 par un pivot d'axe 43. En position d'utilisation du dossier 14, le premier bras 40 est incliné de l'avant vers l'arrière, du haut vers le bas.

Les moyens de basculement du dossier comportent un second bras avant 44 de basculement articulé sur le dossier 14 et sur le plancher 16. Le second bras 44 est lié au dossier 14 par un pivot dont l'axe 46 est situé sensiblement à l'extrémité inférieure du dossier 14. Il est lié au plancher 16 par un pivot d'axe 47. En position d'utilisation du dossier 14, le second bras 44 est incliné de l'avant vers l'arrière, du bas vers le haut.

Le premier bras 40 est articulé sur le plancher 16 à l'arrière du second bras, l'axe du pivot 43 étant situé derrière l'axe du pivot 47. L'axe 42 du pivot d'articulation du bras arrière 40 sur le dossier 14 est située au dessus de l'axe 46 du pivot d'articulation du bras avant 44 sur le dossier 14.

Une biellette 50 relie le premier pied arrière 22 au bras arrière 40. La biellette 50 est articulée à chacune de ses extrémités par un pivot, pour, comme il sera vu ultérieurement, servir de moyens d'entraînement synchronisé de l'assise 12 et du dossier 14.

L'axe 52 du pivot d'articulation des moyens d'entraînement sur le premier bras arrière 40 de basculement est situé sur la moitié haute du bras quand le siège 10 est en position d'utilisation, c'est à dire quand l'assise 12 et le dossier 14 sont en position d'utilisation. L'axe 54 du pivot d'articulation des moyens d'entraînement sur le pied arrière est situé sur la moitié haute du pied quand le siège est en position d'utilisation.

Les pivots de fixation des pieds et des bras sur le plancher et l'assise ou le dossier sont de construction bien connue, comme les pivots à l'extrémité de la biellette d'entraînement.

En position d'utilisation, des moyens d'ancrage conventionnels (non représentés) permettent la fixation du dossier 14 sur la structure du véhicule. Ils comportent un verrou adapté à coopérer avec une gâche solidaire de la structure. De façon usuelle, ces moyens d'ancrage sont placés sensiblement en partie haute du dossier, le verrou étant libéré de la gâche en actionnant une touche de déverrouillage placée sur le dessus du dossier.

Pour replier le siège 10 en le faisant passer de sa position d'utilisation à sa position de rangement, un utilisateur appuie sur la touche de déverrouillage et saisit le dossier 14 de manière à le faire basculer vers l'avant. Les moyens d'entraînement, en l'espèce la biellette 50 reliée à l'un des pieds et à l'un des bras, articulés sur la structure de montage de l'assise, sont prévus de manière que le déplacement de l'assise et le basculement du dossier soient synchronisés. Les moyens d'entraînement sont destinés à faciliter la manipulation du siège 10 de sa position d'utilisation à sa position de rangement.

En position intermédiaire du siège 10 (figure 3), par exemple quand le dossier est incliné à 45 degrés vers l'avant, les pieds 20, 22 sont inclinés vers l'avant, de bas en haut. Le bras arrière 40 est incliné vers l'avant, sensiblement à 30 degrés, de bas en haut. Le bras avant 44 est incliné vers l'arrière, de bas en haut. La biellette 50 coordonne le mouvement du pied arrière et du bras arrière 40. L'assise 12, toujours sensiblement horizontale, a donc été déplacée vers le bas et vers l'avant. Le dossier 14, tout en ayant été incliné vers l'avant, a vu son extrémité inférieure se déplacer vers le bas et vers l'arrière.

En position de rangement du siège 10 (figure 2), les pieds 20, 22 et le bras arrière 40 sont sensiblement horizontaux. Le bras avant 44 est incliné sensiblement de 10 degrés vers l'arrière, de bas en haut. L'assise 12, toujours sensiblement horizontale, a été déplacée vers le bas et vers l'avant. Le dossier 14, en position horizontale avant, a vu son extrémité inférieure se déplacer vers le bas et vers l'arrière. Le siège 10 ainsi replié est très compact.

Le basculement du dossier 14 de sa position d'utilisation à sa position de rangement ne s'effectue pas en tournant autour d'un axe fixe, mais s'effectue selon une pluralité d'axes transversaux différents lors du basculement, si bien qu'au final, le basculement du dossier s'effectue sensiblement selon un axe mobile par rapport au plancher.

Selon l'architecture du véhicule, un siège 10 tel que celui selon l'invention peut permettre de disposer d'une assise haute et d'un dossier haut en position d'utilisation, au bénéfice du confort d'un usager. Un tel siège permet aussi, selon l'architecture du véhicule, d'avoir son assise rangée en partie sous un siège d'une rangée antérieure ou sous la planche de bord dans le cas d'un siège passager avant repliable.

Il est a remarquer que les moyens de basculement du dossier sont tels que le basculement du dossier 14 s'effectue autour d'un axe transversal de basculement qui est mobile par rapport au plancher 16, au bénéfice de la liberté de choix d'architecture du véhicule. En particulier, le dossier 14 peut être placé au dessus de l'arrière de l'assise 12 en position d'utilisation, au bénéfice du confort d'un usager pouvant disposer d'un dossier haut permettant un bon soutien des épaules d'un adulte. Une telle implantation haute du dossier permet, à confort équivalent aux épaules, de disposer d'un dossier plus court que s'il est monté pivotant à sa base sur le plancher, au bénéfice de la compacité en position de rangement.

Avantageusement, les moyens de basculement selon l'invention permettent un plus grand choix de débattement du dossier lors de son basculement. Ils permettent un plus grand choix d'aménagement du plancher. Ils permettent de faciliter le choix de la position des sièges dans le véhicule, au bénéfice de l'habitabilité, de l'ergonomie...

Aux avantages précités, le siège selon l'invention offre aussi l'avantage de permettre à l'utilisateur de pouvoir replier le siège, ou à l'inverse le déployer en agissant seulement sur l'un de l'assise ou du dossier.

Un siège selon l'invention est avantageusement installé devant une paroi de fond 70 d'un compartiment de chargement à agrandir par repli du siège. Une telle paroi de fond est par exemple le plan de chargement formé par le plancher de chargement d'un véhicule utilitaire. Une telle paroi de fond est par exemple l'habillage inférieur d'un compartiment à bagages de véhicule de tourisme.

Un tel siège permet de mieux gérer la liaison entre le plan de chargement de la paroi de fond et le dos 60 du dossier qui sert d'aire de chargement en position de rangement du siège. Le dos 60 du dossier n'est autre que la face arrière du dossier 14 dans sa position d'utilisation.

Dans l'exemple de réalisation d'aménagement de véhicule représenté, le dos 60 du dossier 14, ou plutôt sa face supérieure, en position de rangement le dossier, est sensiblement dans le prolongement d'une paroi de fond 70 d'un compartiment de chargement du véhicule. La paroi de fond 70 est typiquement raccordée au plancher 16 de l'habitacle du véhicule, voire constituée par une même tôle recouverte ou non d'un habillage.

Dans l'exemple de réalisation d'aménagement de véhicule représenté, la face arrière 60 du dossier 14 et la face supérieure de la paroi de fond 70 sont sensiblement planes et sensiblement coplanaires en position de rangement du dossier.

Dans un mode de réalisation d'aménagement de véhicule non représenté, la paroi de fond comporte une rampe avant de rattrapage de la différence de niveau entre le dos du siège et une portion arrière de la paroi de fond. La rampe est un relief dans le plancher. Cette rampe permet de faire glisser de façon continue une charge sur la paroi de fond et sur la face arrière du dossier en position de rangement.

Dans un mode de réalisation d'aménagement de véhicule non représenté, ce dernier comporte un élément de raccordement du dos du dossier avec la paroi de fond. L'élément de raccordement est par exemple une plaque articulée à la base de la paroi arrière ou à l'extrémité avant de la paroi de fond. Une telle plaque peux être articulée à la base de la paroi arrière et à l'extrémité avant de la paroi de fond. La plaque permet de faire glisser de façon continue une charge sur la paroi de fond et sur la face arrière du dossier en position de rangement.

Un siège selon l'invention peut être utilisé avantageusement comme siège passager avant d'un véhicule utilitaire, comme siège arrière d'un véhicule de tourisme, voir comme siège passager avant d'un véhicule de tourisme, pour une aire de chargement de l'avant à l'arrière du véhicule.

## Revendications

1. Siège pour véhicule automobile, comportant une assise (12), un dossier (14), une structure de montage (20, 22) de l'assise articulée par rapport au plancher (16) du véhicule selon des axes transversaux de manière à permettre le déplacement de l'assise d'une position arrière haute d'utilisation à une position avant basse de rangement, des moyens de basculement (40, 44) du dossier (14) entre une position verticale d'utilisation et une position horizontale de rangement dans laquelle il est au moins pour partie superposé au dessus de l'assise, et des moyens d'entraînement (50) articulés sur la structure de montage de l'assise pour synchroniser le déplacement de l'assise et le basculement du dossier, **caractérisé en ce que** les moyens de basculement (40, 44) du dossier (14) comportent un premier bras (40) de basculement articulé sur le dossier (14) et sur le plancher (16) de manière que le basculement du dossier (14) s'effectue autour d'un axe transversal de basculement mobile par rapport au plancher (16).

2. Siège selon la revendication 1, **caractérisé en ce que** les moyens d'entraînement (50) sont articulés sur le premier bras (40) de basculement.

3. Siège selon l'une quelconque des revendications 1 ou 2, **caractérisé en ce que** les moyens de basculement (40, 44) du dossier comportent un second bras (44) de basculement articulé sur le dossier (14) et sur le plancher (16).

4. Siège selon la revendication 3, **caractérisé en ce que** le premier bras (40) est articulé sur le plancher (16) à l'arrière du second bras (44) de basculement.

5. Siège selon l'une quelconque des revendications 1 à 4, **caractérisé en ce que** la structure de montage (20, 22) de l'assise (12) comporte un pied articulé sur le plancher (16) et sur l'assise (12) et **en ce que** les moyens d'entraînement (50) sont articulés sur ledit pied (22) de la structure de montage.

6. Siège selon l'une quelconque des revendications 1 à 5, **caractérisé en ce que** la structure de montage (20, 22) de l'assise (12) comporte un pied avant (20) et un pied arrière (22) chacun articulé sur le plancher (16) et sur l'assise (12) et **en ce que** les moyens d'entraînement (50) sont articulés sur le pied arrière (22) de la structure de montage.

7. Siège selon l'une quelconque des revendications 1 à 6, **caractérisé en ce que** les moyens d'entraînement comportent une biellette (50) dont une extrémité est articulée sur la structure de montage (20, 22) et dont l'autre extrémité est articulée sur le premier bras (40) de basculement.

8. Siège selon l'une quelconque des revendications 1 à 7, **caractérisé en ce que** les moyens de basculement (40, 44) du dossier (14) comportent un second bras (44) de basculement articulé sur le dossier (14) et sur le plancher (16) et **en ce que** l'axe d'articulation (42) du premier bras (40) sur le dossier (14) est situé au dessus de l'axe d'articulation (46) du second bras (44) sur le dossier (14).

9. Siège selon l'une quelconque des revendications 1 à 8, **caractérisé en ce que** les moyens d'entraînement (50) sont articulés sur le premier bras (40) de basculement et **en ce que** un axe d'articulation (52) des moyens d'entraînement (50) sur le premier bras (40) est situé sur la moitié supérieure du premier bras.

10. Siège selon l'une quelconque des revendications 1 à 9, **caractérisé en ce que** la structure de montage (20, 22) de l'assise (12) comporte un pied (22) articulé sur le plancher (16) et sur l'assise (12), **en ce que** les moyens d'entraînement (50) sont articulés sur ledit pied (22) de la structure de montage et **en ce qu'**un axe d'articulation (54) des moyens d'entraînement (50) sur le pied (22) de la structure de montage est situé sur la moitié supérieure dudit pied.

11. Véhicule comportant un siège selon l'une des revendications précédentes, **caractérisé en ce qu'**en position horizontale de rangement du dossier (14), un dos (60) du dossier (14) est situé sensiblement dans le prolongement d'une paroi de fond (70) d'un compartiment de chargement du véhicule.

12. Véhicule selon la revendication 11, **caractérisé en ce que** la paroi de fond comporte une rampe avant de rattrapage de la différence de niveau entre le dos (60) du dossier (14) et une portion arrière de la paroi de fond.

13. Véhicule selon l'une quelconque des revendications 11 à 12, **caractérisé en ce qu'**il comporte un élément de raccordement du dos (60) du dossier (14) avec la paroi de fond.

14. Véhicule selon la revendication 11, **caractérisé en ce que** le dos (60) du dossier (14) et la face supérieure de la paroi de fond (70) sont sensiblement plans et sensiblement coplanaires en position de rangement du dossier.
